Europäisches Patentamt

(19) European Patent Office

Office européen des brevets

(11) Publication number: **0 095 215**

**A2**

(12) # EUROPEAN PATENT APPLICATION

(21) Application number: 83200706.6

(22) Date of filing: 18.05.83

(51) Int. Cl.³: **F 16 L 58/10**

(30) Priority: 20.05.82 GB 8214766

(43) Date of publication of application:
30.11.83 Bulletin 83/48

(84) Designated Contracting States:
AT BE CH DE FR GB IT LI LU NL SE

(71) Applicant: HEPWORTH PLASTICS LIMITED
Genefax House Tapton Park Road
Sheffield S10 3FJ(GB)

(72) Inventor: Hawthorne, Brian James
26 Shays Drive
Clitheroe Lancashire(GB)

(72) Inventor: Lyall, Robert
70 High Street
Gargrave North Yorkshire(GB)

(72) Inventor: Jones, John Richard
46 Hillcrest Avenue
Cliviger Burnley Lancashire(GB)

(74) Representative: Hulse, Thomas Arnold
Hulse & Co. Cavendish Buildings West Street
Sheffield S1 1ZZ(GB)

(54) Pipes for pipelines.

(57) Pipes for a pipeline for laying in a trench are characterised in that each pipe (1 or 1A) is encased in at least two protective layers (2, 3) of material except for at least one exposed jointing portion (4) at an end of the pipe, the inner layer material (2) having controlled deformation characteristics under localised loading, and the outer layer (3) having a resistance to extension and abrasion and a high resistance to tearing or puncturing under point loading, whereby the inner layer accommodates any sharp object pressing into it, whilst the outer layer protects the inner layer during handling, transport and installation, as well as spreading the load of any sharp object over an appreciable area of the inner layer.

Fig 4

## PIPES FOR PIPELINES

This invention relates to pipes for pipelines for laying in trenches with subsequent backfilling.

The conventional method of laying a pipeline in a trench is to lay it on bedding material in the bottom of the trench (if need be with depressions scooped out at intervals to accommodate jointing sockets) and when the pipes have been connected up a backfill material is poured into the trench to cover the pipeline, which often necessitates providing imported bedding and/or backfill material of a suitably uniform nature at high additional cost, and removed soil is replaced to fill the trench completely.

It is difficult to ensure that the pipeline is supported continuously and frequently there are rock fragments or other hard spots which protrude through the bedding material and press against the pipeline. Also, unless great care is taken in backfilling the trench, stones or larger fragments of rock may lie on the pipeline. When backfilling has been completed, the soil pressure, any traffic over the pipeline, and the pressure of fluids in the pipeline will cause high stress in the pipe wall in the area in contact with any stone or rock fragment, and such areas of high local stress are a significant cause of pipeline failure in service, especially with plastics pipelines.

The object of the invention is to prevent such premature failures by providing means preventing contact between a pipeline and any high spot, stone or rock fragment.

According to the present invention, pipes for a pipeline for laying in a trench are each encased in at least two protective layers of material except for at least one exposed jointing portion at an end of the pipe, the inner layer material having controlled deformation characteristics under localised loading, and the outer layer having a resistance to extension and abrasion and a high resistance to tearing or puncturing under point loading.

The inner layer accommodates any sharp object pressing into it, whilst the outer layer protects the inner layer during handling, transport and installation, as well as spreading the load of any sharp object over

an appreciable area of the inner layer.

The inner layer may be of a plastics foam material, such as expanded or extruded polystyrene, or polyurethane, polyethylene or polyether foam, preferably having deformation characteristics such that it will not creep in compression by more than 10% of its thickness under a load of 1.75 $kg/cm^2$ and preferably in a thickness not less than 20 mm.

The inner layer may be bonded to the pipe and the outer layer is preferably bonded to the inner layer.

The outer layer is preferably a woven fabric, such as a fabric woven from polypropylene fibre. Alternatively, a durable elastomeric material, such as polyurethane elastomer, may be used for the outer layer.

The invention is applicable to pipes of plastics material, such as polyvinylchloride, as used to convey water under pressure, or single-walled or double-walled corrugated pipes, as used for drainage and sewerage purposes.

The inner layer may be formed by helically winding on strip foam material, or by locating each pipe in a mould forming a cavity between itself and the pipe and pumping into the cavity a reactive foam mixture or by spraying a reactive foam mixture on to the outside of the pipe. Alternatively, the inner layer may be built up from moulded or extruded lengths of foamed material with inner forms corresponding to the outer surface of each pipe (including any socket portion) to be fitted on and which may be bonded to the pipe or held thereto by the outer layer.

The outer layer may be formed by helically winding a tape on to the outside of the inner layer, preferably with an adhesive between them, or by wrapping a sheet of woven fabric or elastomeric material round the inner layer with adhesive between them. Alternatively, the outer layer may be formed by spray coating with a suitable elastomer, such as polyurethane elastomer, which is both sprayable and tough.

The protective layers need not be of uniform thickness round the pipe (but in general it is convenient to vary the local thickness of the inner layer only); for example, they may result in an overall cross-sectional profile of D-shape, for the flat·

part to be laid on a trench bottom and/or reduce the amount of bedding material needed, or they may result in a square overall cross-section profile, for effecting a reduction also in the amount of backfilling material needed. Alternatively, or in addition, a greater thickness of the inner layer may be provided on one side, to afford a greater measure of protection to the more vulnerable underside of the pipe.

One exposed jointing portion at an end of each pipe may constitute a spigot portion, for fitting (and possibly sealing) in a socket portion on the adjacent end of an adjoining pipe, while the other end of the pipe has a socket portion (for receiving the exposed spigot portion of an adjoining pipe), each socket portion being protected by contiguous portions of the two layers extending along the main length of the respective pipe between the spigot and socket portions, and the overall thickness of the layers over the socket portion may be less than over the rest of the pipe so as to avoid any step in the longitudinal profile, i.e., to accommodate the socket portion within a uniform overall diameter (or other profile). Alternatively, an exposed jointing portion may be provided at each end of each pipe, to enable the pipe to be connected by jointing sleeves, the overall diameter of which is preferably not greater than (and conveniently equal to) the overall diameter of the protective layers on the pipes.

To prevent trench material being trapped between adjacent ends of the protective layers as adjacent pipes are jointed, the ends of the layers are preferably chamfered, and protective sleeves may be provided for the ends, during handling, transit and installation, for example formed by heat shrinkable sleeves or as pre-moulded items, each sleeve having short cylindrical portions on the pipe and the outer layer of protective material and an annular or inclined portion over the ends of the protective layers. These measures can be applied to spigot and/or socket ends.

The construction of the protected pipes also enables ferrous material to be incorporated to facilitate location of the buried pipeline by means of metal detectors.

For example, steel fibres may be woven into the outer layer, or ferrous filler may be incorporated in the inner layer, or steel or ferromagnetic tape may be interposed between the pipes and the inner layer or between the inner and outer layers.

The inner layer may comprise a plurality of trapezoidal cross-section segments longitudinally disposed on and bonded to the outer layer which is provided with an overlap portion free of segments and the composite is wrapped around a pipe and bonded at the overlap. The segments may be profiled adjacent one end to accommodate a socket portion of the pipe.

The invention will now be described, by way of example only, with reference to the accompanying drawings in which:-

Figure 1 is a longitudinal section of a plain ended plastics pipe provided with inner and outer protective layers;

Figure 2 is a longitudinal section similar to Figure 1 but of a socketed pipe;

Figure 3 is a cross-section on the line III-III of Figure 2;

Figure 4 is a longitudinal section of part of a pipeline showing two pipes as in Figure 1 connected by a sleeve and in position in a trench;

Figure 5 is a longitudinal section similar to Figure 4 but showing two pipes as in Figure 2;

Figure 6 is a cross-section on the line VI-VI of Figure 5;

Figure 7 is a cross-section of a pipe having its inner and outer layers resulting in a D-shaped profile;

Figure 8 is a cross-section of a pipe having its inner and outer layers resulting in a square shaped profile;

Figure 9 is an exploded part-sectional longitudinal elevation showing a pipe with moulded blocks forming the inner layer and held together by the outer layer;

Figure 10 is corresponds to Figure 9, but shows the formation applied to a corrugated pipe;

Figure 11 is a fragmentary elevation of an exposed end of a pipe as in Figure 1 or Figure 2, but showing the ends of the protective layers chamfered;

Figure 12 corresponds to Figure 11, shows a protective sleeve over the chambvered ends;

Figure 13 is a fragmentary perspective view of protective layers for use in the invention with trapezoidal cross-section segments forming the inner layer and bonded to the outer layer;

Figure 14 is an end elevation of a socketed pipe with the protective layers of Figure 13 in place; and

Figure 15 is a fragmentary section on the line XV-XV of Figure 14.

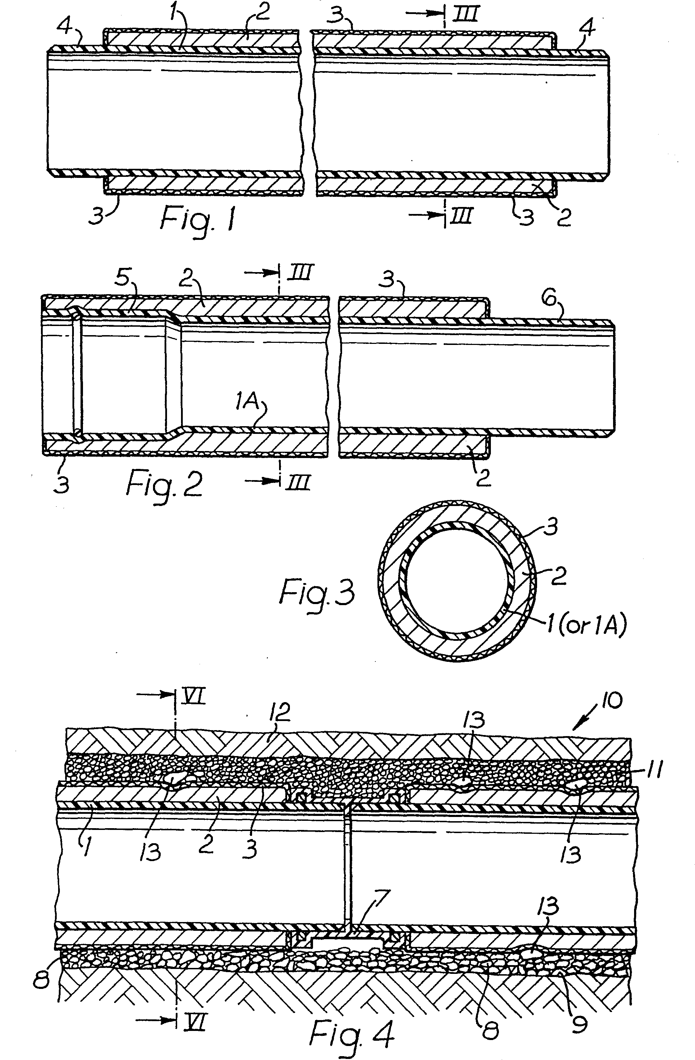

Referring to Figure 1 and 3, a plastics pipe 1 for a pipeline for laying in a trench is encased in an inner layer 2 and an outer layer 3 except for exposed jointing portions 4 at each end of the pipe. The inner layer 2 is of expanded polystyrene which has controlled deformation characteristics under localised loading and the outer layer 3 is of a woven fabric of polypropylene fibre which has a resistance to extension and abrasion and a high resistance to tearing or puncturing under point loading.

Referring to Figures 2 and 3, a plastics pipe 1A is provided with a socket-portion 5 at one end which is encased in contiguous portions of the protective the layers 2 3, and an exposed spigot portion 6 at its other end.

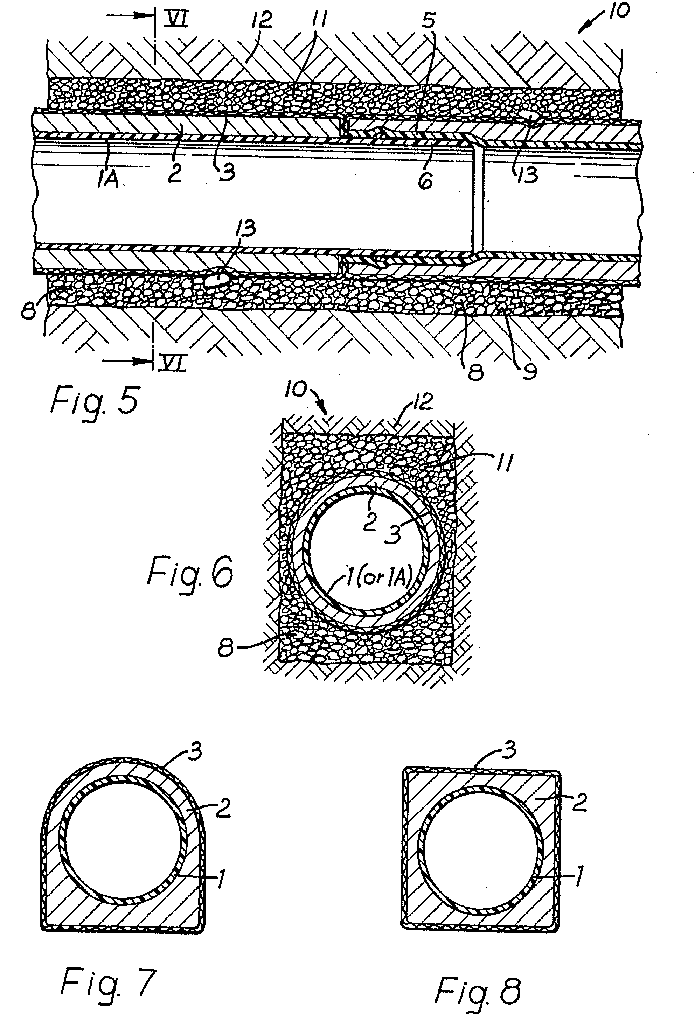

Referring to Figures 4 and 6 pipes 1 as in Figure 1 are jointed by means of sleeves 7 to form a pipeline and are laid on bedding material 8 on the bottom 9 of a trench 10 with backfill material 11 covering  the pipeline and removed  trench soil 12 replaced to fill the trench. Sharp objects such as rocks 13 in the  bedding material 8 and backfilling material 11 are accommodated by the inner layer 2 whilst the outer layer 3 spreads the load of the rocks 13 on the inner layer 2.

Referring to Figures 5 and 6, pipes 1A as in Figure 2 are jointed by means of the respective sockets  5 and spigots 6 to form a pipeline and are laid in a trench similarly to the pipeline of Figure 4.

In Figures 7 and 8 the thickness of the inner layer 2 is varied round the pipe so as to result, in Figure 7, in  a D-shaped overall cross-sectional profile for the flat part 14 to be laid on a trench bottom reducing the amount of bedding material needed  or, as·

in Figure 8, in a square overall cross-section profile for effecting a reduction also in the amount of backfilling material needed.

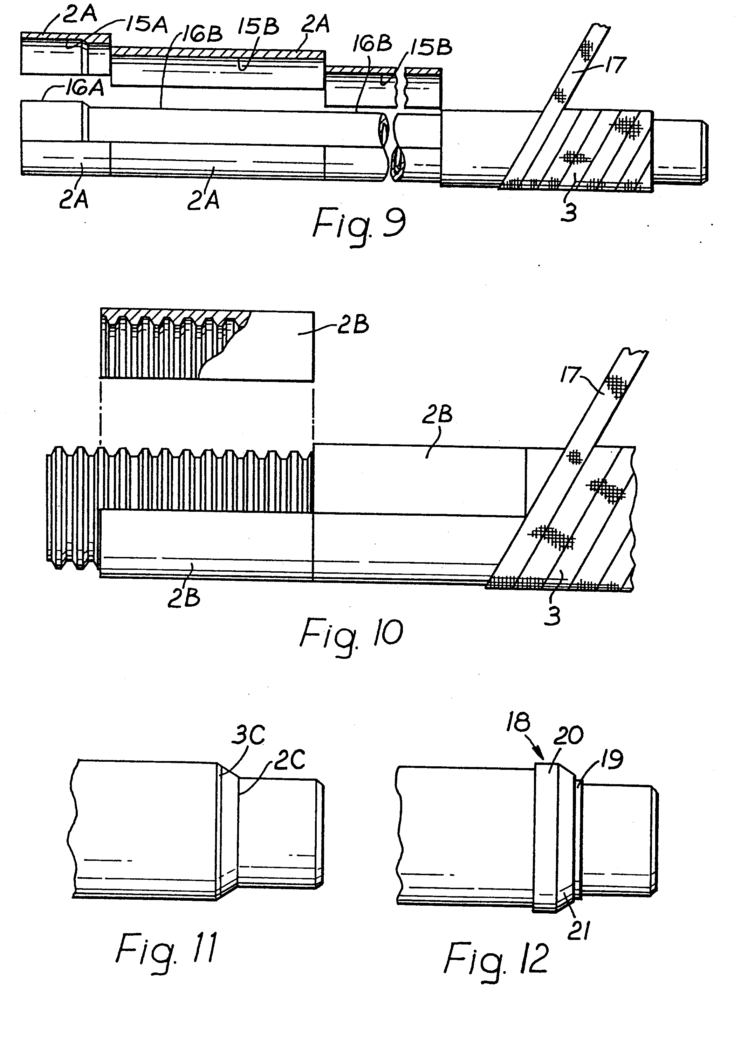

In Figure 9 the inner layer is built up from moulded lengths 2A of foamed material with inner forms 15A, 15B corresponding to respective portions 16A, 16B of the outer surface of each pipe which moulded lengths are fitted on and held to the pipe by the outer layer 3, which is formed by helically winding a tape 17 of woven fabric round the blocks. In Figure 12 the pipe is corrugated and blocks 2B are shaped internally to match.

In Figure 11 the ends 2C and 3C of the layers 2, 3 are chamfered to prevent trench material being dropped between adjacent ends of the layer as exposed pipes are jointed. In Figure 12 a protective sleeve 18 is provided for the chamfered ends of the protective layers , during handling, transit and installation, the sleeve having short cylindrical portions 19,20, on the exposed pipe end 4 and the outer layer 3 respectively and an annular or inclined portion 21 over the ends of the protective layers.

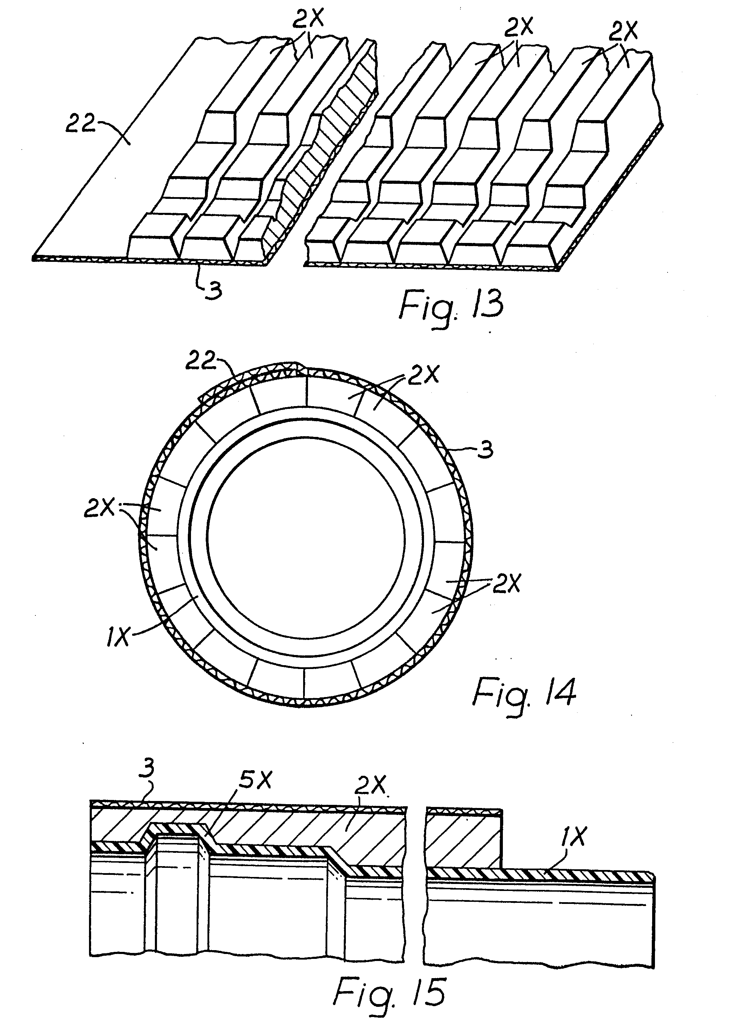

In Figures 13 to 15 the inner layer is·

comprised of a plurality of trapezoidal cross-section segments 2X longitudinally disposed on and bonded to the outer layer 3 which is provided with an overlap portion 22 free of the segments 2X and the composite is wrapped around a pipe 1X and bonded at the overlap 22. The segments 2X are profiled adjacent one end to accommodate a socket portion 5X of the pipe 1X.

CLAIMS

1. Pipes for a pipeline for laying in a trench, characterised in that each pipe (1 or 1A) is encased in at least two protective layers (2, 3) of material except for at least one exposed jointing portion (4) at an end of the pipe, the inner layer material (2) having controlled deformation characteristics under localised loading, and the outer layer (3) having a resistance to extension and abrasion and a high resistance to tearing or puncturing under point loading.

2. Pipes as in Claim 1, characterised in that the inner layer (2) is of a plastics foam material.

3. Pipes as in Claim 2, characterised in that the plastics foam material has deformation characteristics such that it will not creep in compression by more than 10% of its thickness under a load of 1.75 kg/cm$^2$ and has a thickness not less than 20 mm.

4. Pipes as in any one of Claims 1 to 3, characterised in that the outer layer (3) is a woven fabric.

5. Pipes as in any one of Claims 1 to 3, characterised in that the outer layer (3) is a durable elastomeric material.

6. Pipes as in any one of Claims 1 to 5, characterised in that the inner layer (2) is built up from lengths (2A or 2B) with inner forms (15A, 15B) corresponding to the outer surface (16A, 16B) of each pipe and held thereto by the outer layer (3).

7. Pipes as in any one of Claims 1 to 6, characterised in that the outer layer (3) is formed by helically winding a tape (17) on to the outside of the inner layer (2), with an adhesive bewtween them.

8. Pipes as in any one of Claims 1 to 7, characterised in that the thickness of the inner layer (2) varies round the pipe (1).

9. Pipes as in Claim 8, characterised in that varying the thickness of the inner layer (2) results in an overall cross-sectional profile of D-shape or in a square overall cross-section profile.

10. Pipes as in any one of Claims 1 to 9, characterised in that the ends (2C, 3C) of the protective layers (2, 3) are chamfered.

11. Pipes as in Claim 10, characterised in that protective sleeves (18) are provided for the ends (2C, 3C) of the protective layers (2, 3), each sleeve having short cylindrical portions (19, 20) on the pipe (1) and the outer layer (3) of protective material and an annular or inclined portion (21) over the ends (2C, 3C) of the protective layers.

12. Pipes as in any one of Claims 1 to 11, characterised in that ferrous material is incorporated into one or more of the protective layers (2, 3).

13. Pipes as in any one of Claims 1 to 11, characterised in that steel or ferromagnetic tape is interposed between the pipes (1) and the inner layer (2) or between the inner and outer layers ( 2, 3).

14. Pipes as in any one of Claims 1 to 11, characterised in that the inner layer (2) comprises a plurality of trapezoidal cross-section segments (2X) longitudinally disposed on and bonded to the outer layer (3) which is provided with an overlap portion (22) free of segments and the composite is wrapped around a pipe (1X) and bonded at the overlap (22).

15. Pipes as in Claim 14, characterised in that the segments (2X) are profiled adjacent one end to accommodate a socket portion (5X) of the pipe (1X).

0095215

Fig. 1

Fig. 2

Fig.3

Fig. 4

Fig. 5

Fig. 6

Fig. 7

Fig. 8

0095215

Fig. 9

Fig. 10

Fig. 11

Fig. 12

2X 2X 2X

22

3

*Fig. 13*

22 2X

3

2X

2X

1X

*Fig. 14*

3 5X 2X

1X

*Fig. 15*